# EUROPÄISCHE PATENTSCHRIFT

(11) **EP 3 305 479 B1**
(45) Veröffentlichungstag und Bekanntmachung des Hinweises auf die Patenterteilung: **31.03.2021**
(21) Anmeldenummer: 17001663.8
(22) Anmeldetag: 10.10.2017
(51) Int. Cl.: B25J 15/02

(54) **EINSTELLBARER AUFSATZADAPTER**
ADJUSTABLE ATTACHMENT ADAPTER
ADAPTATEUR RÉGLABLE

(30) Priorität: 10.10.2016 DE 102016011975
(43) Veröffentlichungstag der Anmeldung: 11.04.2018
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(56) Entgegenhaltungen:
- DE-A1- 3 715 140
- DE-A1-102010 020 653
- DE-A1-102013 019 034
- JP-A- 2010 247 288

## Beschreibung

Die Erfindung betrifft einen einstellbaren Aufsatzadapter eines auf einem Schlitten einer Greifvorrichtung gelagerten Greifelements, wobei an dem Schlitten ein Schlittenadapter und an dem Greifelement ein Greifelementeadapter befestigt ist.

Aus der DE 10 2010 020 653 B4 ist ein derartiger Aufsatzadapter bekannt. Im Schlittenadapter ist als Sperrstück eine Sperrstückausnehmung vorhanden. Im Greifelementadapter sitzt als Sperrer eine manuell betätigbare mit einer Verdrehsicherung ausgestattete Schraube, deren Spitze als Sperrer in der Sperrstückausnehmung verriegelnd einschiebbar ist.

Die DE 37 15 140 A1 beschreibt eine Handhabungseinrichtung mit zwei aufeinander zu bewegbaren Greifelementen. Jedes Greifelement sitzt eingesteckt in einem elektrisch fahrbaren Schlitten. Dazu hat jeder Schlitten fünf parallele Aufnahmebohrungen. Das einzelne Greifelement ist in der jeweiligen Aufnahmebohrung über einen federbelasteten Schieber gegen Herausfallen arretiert.

Der vorliegenden Erfindung liegt die Problemstellung zugrunde, einen einstellbaren Aufsatzadapter in Verbindung mit einer Greifvorrichtung für große Klemmkräfte zu entwickeln, dessen Greif- bzw. Zangenweite auf einfache Weise verstellbar ist.

Diese Problemstellung wird zum einen mit den Merkmalen des Patentanspruchs 1 gelöst. Dabei ist an dem Schlitten ein Schlittenadapter und an dem Greifelement ein Greifelementeadapter befestigt. Der Greifelementeadapter sitzt im Schlittenadapter manuell verschiebbar und hat eine Verschieberichtung, die parallel zur Verfahrrichtung des Schlittens orientiert ist. Zwischen dem Schlittenadapter und dem Greifelementeadapter ist mindestens ein formschlüssiges, durch eine lineare manuelle Schiebebewegung, deren Rasthub quer zur Verfahrrichtung des Schlittens orientiert ist, gegen eine Federkraft entrastbares Riegel- oder Zahnrichtgesperre angeordnet.

Das Riegel- oder Zahnrichtgesperre hat einen Sperrer, der zur Änderung der Greif- bzw. Zangenweite der Greifvorrichtung mit einem Sperrstück zusammenwirkt, das in Einstellsverschieberichtung hintereinander mehrere gleichmäßig oder ungleichmäßig geteilte Riegel- oder Rastausnehmungen aufweist. Mit der oder den Aufsatzadaptern ist es möglich, den regulären Werkstückspannbereich einer Greifvorrichtung beispielsweise um das Mehrfache manuell zu vergrößern. Bei Greifvorrichtungen, die zum Greifen leichter Werkstücke ausgelegt sind, werden die größeren Bauteile der Aufsatzadapter aus einer Aluminiumlegierung gefertigt.

Angetrieben werden die Schlitten beispielsweise über drei hintereinander angeordnete Getriebe, z.B. ein Stirnradgetriebe, ein Schneckengetriebe und ein Zahnstangengetriebe. Anstelle dieser Getriebe oder zusätzlich zu mindestens einem Teil dieser Getriebe können auch Schiebekeilgetriebe, Kurven-, Hebel-, Kulissen- oder Zugmittelgetriebe eingesetzt werden.

In den Ausführungsbeispielen werden nur Teile von Parallelgreifern gezeigt. Selbstverständlich können die meisten Teile, mit Ausnahme des Gehäuses, auch für Drei-, Vier- und Mehrbacken-, Mehrschlitten- oder Zentrischgreifer verwendet werden, so dass die dargestellte Problemlösung auch dort eingesetzt werden kann. Der Aufsatzadapter kann sowohl in Außen- als auch in Innengreifern verwendet werden.

Selbstverständlich ist die Lösung des Problems auf einen Winkelgreifer übertragbar. Dazu wird der im Grundkörper der Greifvorrichtung verschiebbar geführte Schlitten durch einen greifelementetragenden Schwenkarm ersetzt, der im Grundkörper in einem Schwenkgelenk schwenkbar gelagert ist. An dem Schwenkarm wird hier der Schlittenadapter befestigt.

Entgegen der Darstellung in dem Ausführungsbeispiel kann der Schlittenadapter ein relativ kurzer nutensteinartiger Körper sein, auf dem der Greifelementeadapter in Gestalt einer langen Führungsschiene verschiebbar sitzt.

Nach dem Ausführungsbeispielen weisen der Schittenadapter und der Greifelementeadapter jeweils zwei Rastsysteme auf, bei denen je ein Sperrer in je einer Seitenwange eines als Sperrstück dienenden Führungsaufsatzes in einer von mehreren Sperrausnehmungen verriegel- oder verrastbar ist. Es ist jedoch auch möglich, nur ein Rastsystem einzusetzen. Es kann dabei z.B. nur in einer Seitenwange oder auch im Boden des Führungsaufsatzes integriert oder angebaut sein.

Weitere Einzelheiten der Erfindung ergeben sich aus den Unteransprüchen und der nachfolgenden Beschreibung schematisch dargestellter Ausführungsformen.
- Figur 1:: Perspektivische Ansicht einer Parallelgreifvorrichtung;
- Figur 2:: halbseitiger Schnitt zu Figur 1;
- Figur 3:: Querschnitt des Führungsaufsatzes;
- Figur 4:: Querschnitt des Führungsaufsatzes und des Schiebeschlittens in verrasteter Position;
- Figur 5:: wie Figur 4, jedoch in unverrasteter Position;
- Figur 6:: Explosionszeichnung des einstellbaren Aufsatzadapters;
- Figur 7:: vergrößerter Längsschnitt durch den Führungsaufsatz;
- Figur 8:: wie Figur 7, jedoch mit nur einer Zahnreihe.

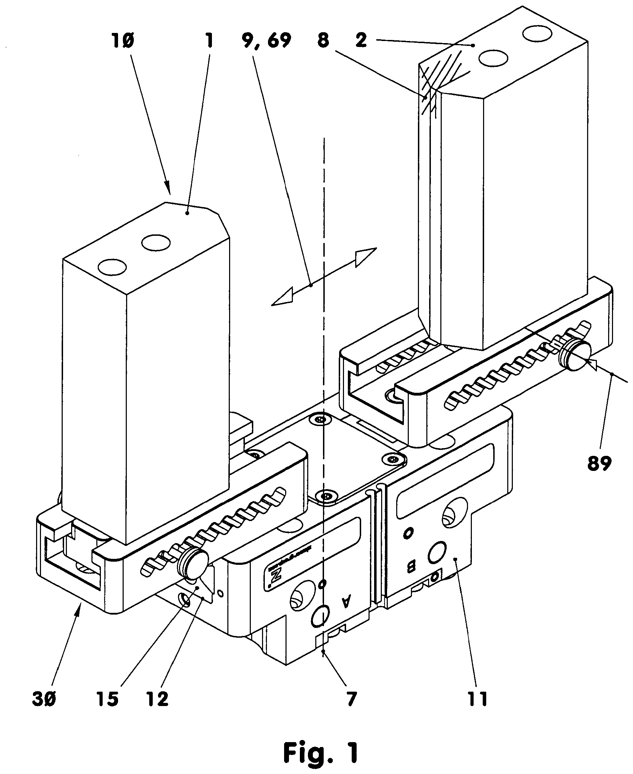

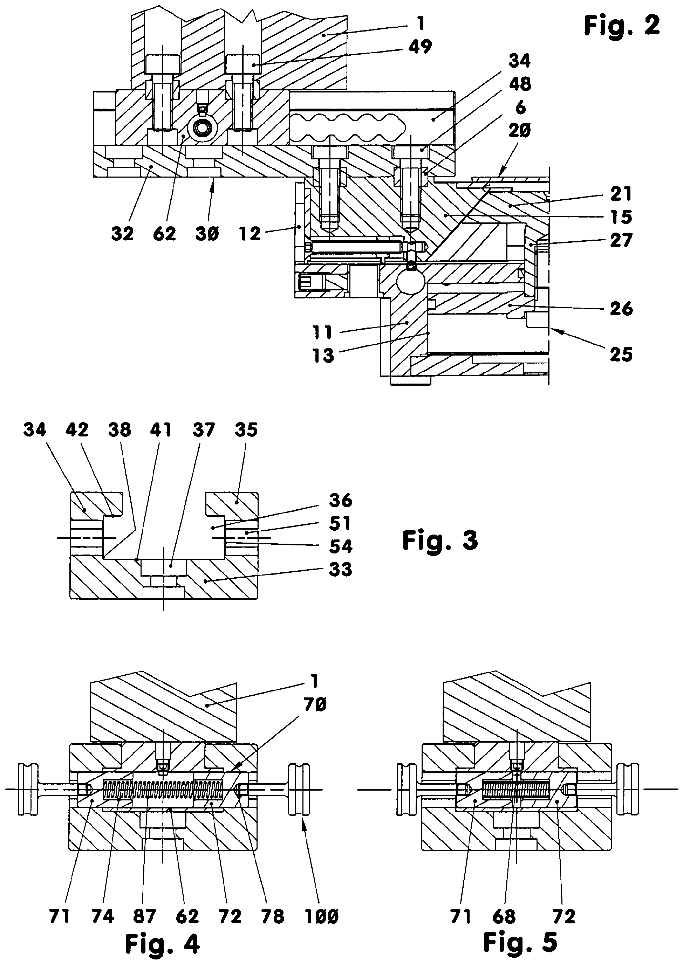

Die Figuren 1 und 2 zeigen eine Parallelgreifvorrichtung mit zwei jeweils auf Schlitten (15) sitzenden Greifbacken (1, 2). Die in ihrer Längsrichtung beweglichen Schlitten (15) sind in einem Grundkörper (11) in einer Führungsnut (12) z.B. gleitgelagert geführt. Der die Führungsnut (12) aufnehmende Grundkörper (11) umgibt ferner eine z.B. doppeltwirkende Zylinder-Kolben-Einheit (25). Die Zylinder-Kolben-Einheit wirkt über ein Doppelschiebekeilgetriebe (20) auf die Schlitten (15). Auf jedem Schlitten (15) ist ein einstellbarer Aufsatzadapter (30) befestigt. Letzterer trägt die auf ihm manuell verschiebbaren Greifelemente (1, 2).

Die Figur 2 stellt die linke Hälfte der Parallelgreifvorrichtung im Teillängsschnitt dar. Der Greifbacken (1) befindet sich in geöffneter Position. Der z.B. im Wesentlichen quaderförmige Grundkörper (11) der Parallelgreifvorrichtung besteht aus einem oberen Führungsabschnitt und einem unteren Antriebsabschnitt. Die Länge des Grundkörpers (11) ist z.B. fast doppelt so lang wie seine Breite und die Grundkörperhöhe. Im Ausführungsbeispiel ist der Grundkörper (11) z.B. 151 mm lang. Der Führungsabschnitt nimmt zentral die nach oben - zu den Greifelementen (1, 2) hin - offene Führungsnut (12) auf, die z.B. einen rechteckigen Querschnitt hat. In den Seitenwandungen der Führungsnut (12) sind z.B. separate Führungsschienen eingearbeitet.

Der unterhalb des Führungsabschnittes gelegene Antriebsabschnitt nimmt im Wesentlichen die Zylinder-Kolben-Einheit (25) auf. Von der Grundkörperunterseite aus ragt eine z.B. ovale Zylinderausnehmung (13) in den Grundkörper (11) in Richtung der Führungsnut (12) hinein, vgl. Figur 2. Im Zentrum des Bodens der Zylinderausnehmung (13) befindet sich eine Durchgangsbohrung, die die Zylinderausnehmung (13) mit der Führungsnut (12) verbindet. Mittig weist die Durchgangsbohrung einen Einstich zur Aufnahme eines Kolbenstangendichtringes auf.

In der von einem Deckel dicht verschlossenen Zylinderausnehmung (13) ist ein ovaler Kolben (26) mit seiner Kolbenstange (27) angeordnet. Die Kolbenstange (27) ist am Kolben (26) angeschraubt. Der Kolben (26) und der Doppelschiebekeil (21) des Doppelschiebekeilgetriebes (20) bilden zusammen eine formsteife Baugruppe.

Der Doppelschiebekeil (21) ist in der Führungsnut (12) als Teil eines Doppelschiebekeilgetriebes (20) angeordnet. Er weist an seinen stirnseitigen Enden jeweils eine im Schiebekeilwinkel abgeschrägte Stirnfläche auf, die jeweils Teil eines T-förmigen Keilstegs ist. Jeder der beiden Keilstege des Doppelschiebekeils (21) greift formschlüssig in einen in der Führungsnut (12) gelagerten Schlitten (15) ein.

Jeder Schlitten (15) ist primär ein quaderförmiger Körper. In je einer abgeschrägten Stirnseite ist eine Keilstegnut zur Aufnahme des jeweiligen Keilstegs des Doppelschiebekeils (21) vorgesehen. Beidseitig sind z.B. je zwei Schlittenführungsnuten in den Schlitten eingearbeitet. Mit diesen Nuten ist der einzelne Schlitten (15) auf den Führungsschienen gleitgelagert.

Auf der Oberseite jedes Schlittens (15) befindet sich eine z.B. quaderförmige Erhöhung, die bei montiertem Schlitten (15) oben um z.B. 1,2 mm - über die Grundkörperoberseite überstehend - aus der Führungsnut (12) herausragt. Die ebene Oberseite der Erhöhung hat zwei mit Zylindersenkungen ausgestattete Gewindebohrungen, an denen die Greifbacken (1, 2) lösbar befestigt werden. In den Zylindersenkungen stecken Zentrierhülsen zur präzisen, zumindest formschlüssigen Positionierung des Führungsaufsatzes (32) des Aufsatzadapters (30) auf den Schlitten (15).

Die Schlitten (15) sind hier in der Führungsnut (12), vgl. Figur 1, so hintereinander angeordnet, dass sich bei minimalem Greifbackenabstand ihre einander zugewandten Stirnseiten kontaktieren oder zumindest fast berühren. Der mittlere Bereich der Nutöffnung der Führungsnut (12) ist mit einer z.B. rechteckigen Abdeckplatte verschlossen.

Der Aufsatzadapter umfasst zwei größere Bauteile, einen Schlittenadapter (31) und einen von ihm getragenen Greifelementeadapter (61). In den Ausführungsbeispielen ist der Schlittenadapter (31) ein Führungsaufsatz (32) in Form einer Führungsschiene. Dazu hat er eine quaderförmige Gestalt, in der in Längsrichtung eine T-nutartige z.B. 11 mm hohe Führungsnut (36) eingearbeitet ist, vgl. Figur 3, die im unteren Bereich z.B. 29 mm und im oberen, engeren Bereich z.B. 20 mm breit ist. Unterhalb der Führungsnut (36) befindet sich das plattenartige Basisteil (33), an das beidseitig die den Greifelemeteadapter (61) bereichsweise umgreifenden Seitenwangen (34, 35) angeformt sind.

Das Basisteil (33), mit dem der Führungsaufsatz (32) am jeweiligen Schlitten (15) befestigt wird, hat in seinen beiden Endbereichen jeweils zwei entlang der Längsrichtung hintereinanderliegende Befestigungsbohrungen (37). Die Mittellinien beider Bohrungen (37) liegen auf der vertikalen Mittenlängsebene (8) der Greifvorrichtung (10). Der Abstand der Bohrungen (37) beträgt jeweils 24 mm. Die äußere Bohrung (37) der nach Figur 1 vorderen Bohrungsgruppe hat zur nächsten Bauteilstirnseite einen Abstand von 9,1 mm, während die äußere Bohrung (37) der nach Figur 1 hinteren Bohrungsgruppe zur nächstgelegenen Stirnseite des Führungsaufsatzes (32) 13 mm beträgt. Alle vier Bohrungen (37) sind beidseitig zur Aufnahme von Zentrierhülsen oder Schraubenköpfen mit zylindrischen Senkungen ausgestattet.

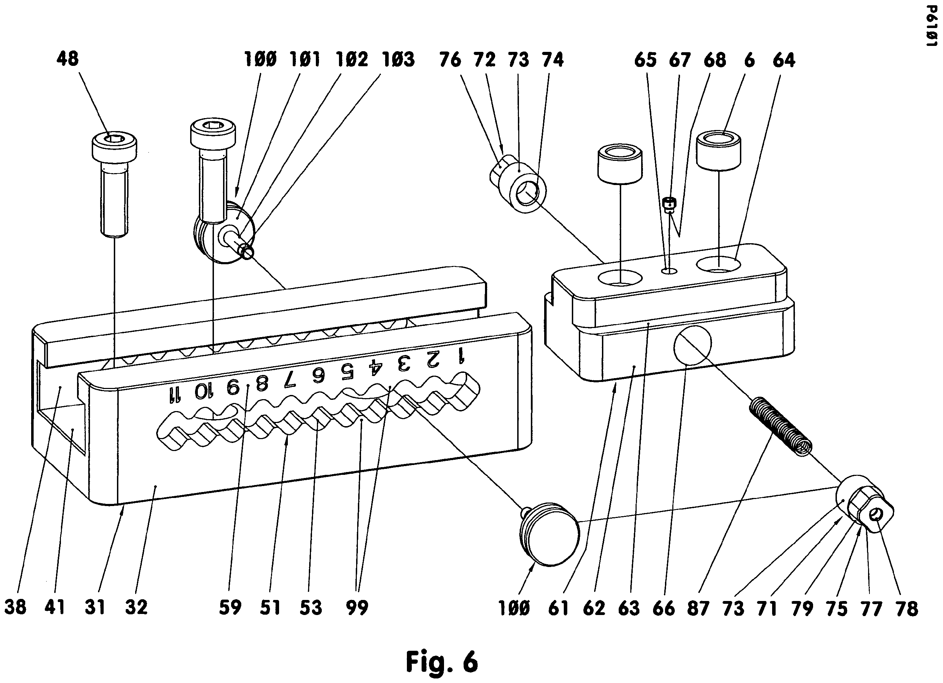

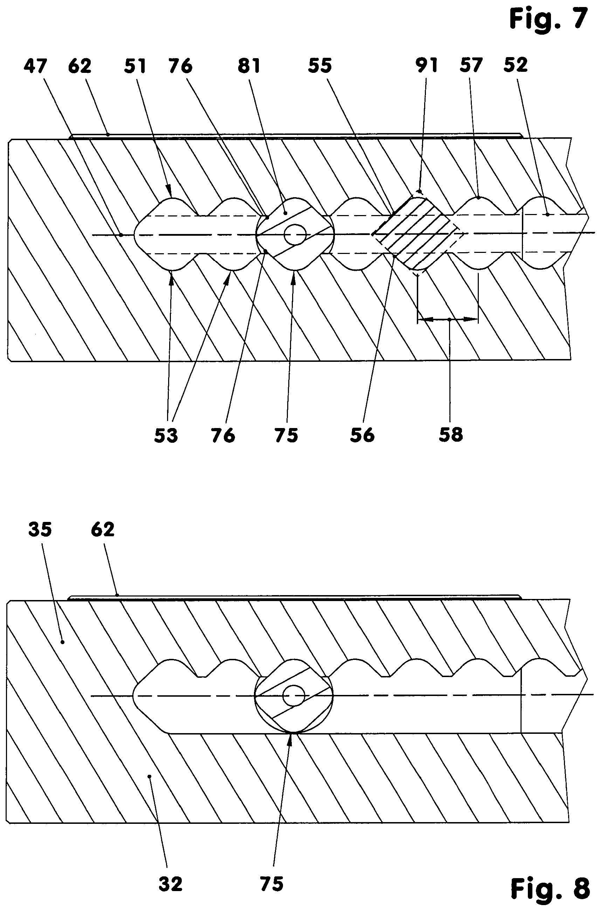

Beide Seitenwangen (34, 35) weisen eine Reihensperrausnehmung (51) auf. Letztere liegen sich spiegelsymmetrisch zur vertikalen Mittenlängsebene (8) gegenüber. Die Reihensperrausnehmung (51) ist eine Überlagerung einer Verschiebeausnehmung (52), in Figur 7 gestrichelt dargestellt, und einer Vielzahl von in gleicher Teilung (58) aneinandergereihten Einzelsperrausnehmungen (53). Nach dem Ausführungsbeispiel sind es 11 Einzelsperrausnehmungen (53) mit einer Teilung (58) von 7 mm. Die Reihensperrausnehmung (51) hat eine zur Schlittenverfahrrichtung (9) parallele Mittellinie (47), die z.B. auf halber Höhe zwischen dem Boden (41) der Führungsnut (36) und der Umgriffsflanke (42) der Seitenwangen (34, 35) liegt, vgl. Figur 3. Alle Einzelsperrausnehmungen (53) liegen auf der Mittellinie (47), die zugleich auch die Verschiebeausnehmung (52) halbiert. Nach Figur 6 ist oberhalb der Reihensperrausnehmung (51) eine Nummerierung angeordnet, die jeder Einzelsperrausnehmung (53) eine Zahl zuordnet.

Die Verschiebeausnehmung (52), die es ermöglicht, den Greifelementeadapter (61) mittels der Betätigungselemente (100) entlang der gesamten Reihensperrausnehmung (51) zu verschieben, hat z.B. eine Höhe von 4,6 mm.

Die Einzelsperrausnehmung (53) hat in der Zeichnungsebene von Figur 7 den rautenförmigen Querschnitt (91), der eine quadratische Fläche hat. Jede lineare Querschnittskante stellt eine plane Sperrflanke (55, 56) dar. Zwei benachbarte Sperrflanken gehen über eine Ausrundung (57) über, die z.B. einen 2,1 mm-Radius aufweist. Die Sperrflanken (55, 56) haben entlang der geraden Querschnittskante hier eine tragende Länge von 2,15 mm.

Durch zwei benachbarte Sperrflanken, die über die Wandung der Verschiebeausnehmung (52) miteinander verbunden sind, wird ein Zahn (99) der Reihensperrausnehmung (51) gebildet. Die Kontur der Reihensperrausnehmung (51) ist entlang der inneren Seitenflanken (38) der Führungsnut (36) angefast.

Anstelle des quadratischen Querschnitts (91) kann auch ein rautenförmiger Querschnitt benutzt werden, wobei der eingeschlossene Winkel - zweier benachbarter durch die Ausrundung (57) getrennter Sperrflanken (55, 56) - zwischen 30 und 120 Winkelgraden liegen kann.

Die vier vertikalen Kanten des Führungsaufsatzes (32) sind hier mit einem 5 mm-Radius abgerundet.

Der Schiebeschlitten (62) ist im Wesentlichen ein quaderförmiger z.B. 52 mm langer und 27 mm breiter Körper, der zur vertikalen Mittenlängsebene (8) spiegelsymmetrisch aufgebaut ist. Seine maximale Höhe beträgt 17,6 mm. Nach den Figuren 4 bis 6 hat der T-nutensteinförmige Schiebeschlitten (62) beidseitig einen z.B. 6,6 mm hohen Umgreifabsatz (63).

Nach Figur 2 weist der Schiebeschlitten (62) zwei Befestigungsgewindebohrungen (64) zur Mittellinie (7) auf. Die Befestigungsgewindebohrungen (64) haben beidseitig zylindrische Senkungen und einen Abstand von z.B. 24 mm. Über die Befestigungsgewindebohrungen (64) werden die Greifelemente (1, 2) am Schiebeschlitten (62) unter Zwischenlage von Zentrierhülsen mittels der Schrauben (49) befestigt. Mittig zwischen den Befestigungsgewindebohrungen (64) befindet sich eine Stufenbohrung (65), die nach den Figuren 2, 4 und 5 im unteren Bereich z.B. ein M3-Gewinde aufweist. Der obere Bereich hat einen Durchmesser von 3 oder 4 mm.

Unterhalb der Stufenbohrung (65) und zwischen den Befestigungsgewindebohrungen (64) befindet sich eine feinbearbeitete Führungsbohrung (66), die senkrecht zur Mittellinie (7) und senkrecht zur Greifrichtung (9) orientiert ist. In die Führungsbohrung (66) mündet die Stufenbohrung (65). In das Gewinde der Stufenbohrung (65) ist ein Gewindestift (67) eingeschraubt, dessen Zapfen (68) z.B. 0,8 mm in die Führungsbohrung (66) als Anschlag hineinragt. Ggf. hat der Gewindestift (67) in seinem hinteren, dem Zapfen (68) abgewandten Bereich eine Verbreiterung, über die er als Tiefenanschlag an einem - zwischen dem oberen und dem unteren Stufenbohrungsabschnitt der Stufenbohrung (65) gelegenen - Bund ansteht.

Die vier vertikalen Kanten des Führungsaufsatzes (32) sind z.B. mit einem 4 mm-Radius abgerundet.

In der Führungsbohrung (66) des Schiebeschlittens (62) sind zwei Sperrer (71, 72) spiegelsymmetrisch zur vertikalen Mittenlängsebene (8) verschiebbar angeordnet, vgl. Figuren 4 bis 6. Der einzelne, einteilige Sperrer (71, 72) besteht aus einem zylindrischen Schiebestück (73) und einem Raststück (75). Das Schiebestück (73), das in der Führungsbohrung (66) gleitfähig mit geringem Spiel eingepasst ist, hat z.B. bei einem Durchmesser von 8,87 mm eine Länge von 7,3 mm. Es hat eine plane Stirnseite, in der eine z.B. 7 mm tiefe Sacklochbohrung eingearbeitet ist. Letztere dient bei einem Innendurchmesser von 5 mm als Federführungsbohrung (74).

Das am Schiebestück (73) angeformte, z.B. 6 mm lange Raststück (75) ist ein Vierkant, dessen theoretischen Kantenlängen 7,5 mm messen. Die Längskanten des Vierkants sind z.B. mit einem 2,1 mm-Radius abgerundet. Die Stirnfläche ist ringsherum mit einer 0,5*30°-Raststückfrontfase (77) versehen, die ein problemloses Einschieben in eine Einzelsperrausnehmung (53) garantiert. Im Zentrum der Stirnfläche befindet sich eine z.B. 3 mm tiefe M3-Gewindebohrung (78), in der das Betätigungselement (100) aufgenommen werden kann.

Zwischen beiden im Schiebeschlitten (62) eingebauten Sperrern (71, 72) ist eine Schraubendruckfeder (87) angeordnet, die sich an den beiden Böden der Federführungsbohrungen (74) abstützt. Zwischen dem Schiebestücke (73) und dem angeformten Raststück (75) befindet sich parallel zu den Stirnflächen des Sperrers (71, 72) ein planer Anschlagbund (79), der hier aus vier Kreisabschnitten besteht. Die Anschlagbünde (79) kontaktieren, nach Figur 4, bei unbetätigten Sperrern (71, 72) die Seitenflanken (38) der Seitenwangen (34, 35).

Die lösbaren, einteiligen Betätigungselemente (100) sind z.B. Drehteile, die aus einem Betätigungsteller (101), einem Betätigungsschaft (102) und einem M3-Außengewinde bestehen. Der scheibenförmige Betätigungsteller (101) hat z.B. bei einer Breite von 5 mm einen ergonomisch günstigen Durchmesser von 13 mm. Der z.B. 9,5 mm lange zylindrische Schaft (102) hat einen Durchmesser von 3 mm.

Vor dem manuellen Verschieben der Greifelemente (1, 2) werden in die Betätigungsgewindebohrungen (78) der Sperrer (71, 72) die Betätigungselemente (100) eingeschraubt. Durch das Vierkantprofil des jeweiligen Raststücks (75) verdreht sich der jeweilige Sperrer (71, 72) nicht in der Führungsbohrung (66) des Schiebeschlittens (62). Durch das Zusammenschieben der Sperrer (71, 72) über die Betätigungselemente (100) in Richtung des Rasthubs (89), werden beide Raststücke (75) vollständig aus den sie bisher lagernden Einzelsperrausnehmungen (53) entriegelt. Die inneren Stirnflächen der Sperrer (71, 72) kommen hierbei am Zapfen (68) des Gewindestifts (67) zur Anlage.

Nach dem Verschieben des Schiebeschlittens (62) in eine neue Verriegelungsposition werden die Betätigungselemente (100) losgelassen. Unter dem Druck der Sperrfeder (87) werden die Raststücke (75) in die neue Einzelsperrausnehmung (53) eingeschoben. Hiernach ist der Schiebeschlitten (62) im Führungsaufsatz (32) verriegelt. Abschließend werden die Betätigungselemente (100) aus den Sperrern (71, 72) herausgeschraubt.

Beim Greifen eines Werkstückes durch die Greifvorrichtung (10) legt sich in jeder Seitenwange (34, 35) des Führungsaufsatzes (32) in der Reihensperrausnehmung (51) ein Sperrer (71, 72) über sein Raststück (75) an. Der Querschnitt (81) des Raststückes (75) liegt deckungsgleich auf dem Querschnitt (91) der jeweiligen Einzelsperrausnehmung (53). Die Abstützflanken (76) des Raststückes (75) liegen in Belastungsrichtung pro Seitenwange (34, 35) an den beiden - durch die Verschiebeausnehmung (52) getrennten - großflächigen Sperrflanken (55, 56) an. Die beiden Sperrflanken (55, 56) keilen dabei das Raststück (75) zentrierend ein.

Nach Figur 8 fehlt in der Reihensperrausnehmung (51) z.B. die untere Zahnreihe. Hierdurch wird beim Greifen der Schiebeschlitten (62) gegen den Boden (41) der Führungsnut (36) gepresst. Je nach Greifbedingung kann es auch erforderlich sein, die obere Zahnreihe anstelle der unteren wegzulassen. In diesem Fall wird der Schiebeschlitten (62) gegen die Umgriffsflanke (42) des Führungsaufsatzes (32) gedrückt.

### Bezugszeichenliste:

- 1, 2: Greifelemente, Greifbacken
- 6: Zentrierhülsen für (11) und (61)
- 7: Mittellinie für (10) und (25)
- 8: vertikale Mittenlängsebene
- 9: Greifrichtung, Schlittenverfahrrichtung

- 10: Greifvorrichtung, Parallelgreifvorrichtung
- 11: Grundkörper, Gehäuse
- 12: Führungsnut
- 13: Zylinderausnehmung

- 15: Schlitten

- 20: Doppelschiebekeilgetriebe, Keilhakengetriebe
- 21: Doppelschiebekeil

- 25: Zylinder-Kolben-Einheit
- 26: Kolben
- 27: Kolbenstange

- 30: Aufsatzadapter
- 31: Schlittenadapter
- 32: Führungsaufsatz, Führungsschiene, Sperrstück Schiene, u-förmig
- 33: Basisteil
- 34: Seitenwange, erste, Sperrstück
- 35: Seitenwange, zweite, Sperrstück
- 36: Führungsnut
- 37: Befestigungsbohrungen mit je zwei Senkungen
- 38: Seitenflanken von (36)
- 41: Boden von (36)
- 42: Umgriffsflanke

- 47: Mittellinie
- 48: Schrauben, (32) an (12)
- 49: Schrauben, (1) an (32)

- 51: Reihensperrausnehmung zu (70)
- 52: Verschiebeausnehmung
- 53: Einzelsperrausnehmung zu (70)
- 54: Einzelsperrausnehmungsfase
- 55: Sperrflanke, oben
- 56: Sperrflanke, unten
- 57: Ausrundung
- 58: Teilung von (53)
- 59: Nummerierung

- 61: Greifelementeadapter
- 62: Schiebeschlitten, T-nutensteinartiger Körper
- 63: Umgreifabsatz
- 64: Befestigungsgewindebohrungen mit Senkungen
- 65: Stufenbohrung mit Gewinde, vertikal
- 66: Führungsbohrung, Querbohrung
- 67: Gewindestift mit Zapfen, Anschlagstift
- 68: Zapfen
- 69: Verschieberichtung von Rast- zu Rastposition

- 70: Riegel- oder Zahnrichtgesperre
- 71: Sperrer, erster
- 72: Sperrer, zweiter
- 73: Schiebestück
- 74: Federführungsbohrung, Sacklochbohrung
- 75: Raststück, Vierkantprofil
- 76: Abstützflanken
- 77: Raststückfrontfase
- 78: Betätigungsgewindebohrung, Ausnehmung
- 79: Anschlagbund zwischen (73) und (75)

- 81: Querschnitt, quadratisch; von (75)
- 87: Schraubendruckfeder, Sperrfeder
- 89: Rasthub

- 91: Querschnitt, quadratisch; von (53)
- 99: Zähne

- 100: Betätigungselement
- 101: Betätigungsteller
- 102: Betätigungsschaft
- 103: Gewinde

## Patentansprüche

1. Einstellbarer Aufsatzadapter eines auf einem Schlitten (15) einer Greifvorrichtung (10) gelagerten Greifelements (1, 2),
- wobei an dem Schlitten (15) ein Schlittenadapter (31) und an dem Greifelement (1, 2)) ein Greifelementeadapter (61) befestigt ist,
- wobei der Greifelementeadapter (61) im Schlittenadapter (31) manuell verschiebbar sitzt und eine Verschieberichtung (69) hat, die parallel zur Verfahrrichtung (9) des Schlittens (15) orientiert ist und
- wobei zwischen dem Schlittenadapter (31) und dem Greifelementeadapter (61) mindestens ein formschlüssiges, durch eine lineare manuelle Schiebebewegung, deren Rasthub (89) quer zur Verfahrrichtung (9) des Schlittens (15) orientiert ist, gegen eine Federkraft entrastbares Riegel- oder Zahnrichtgesperre (70) angeordnet ist.

2. Einstellbarer Aufsatzadapter gemäß Anspruch 1, **dadurch gekennzeichnet, dass** das formschlüssig, manuell entrastbare Riegel- oder Zahnrichtgesperre (70) ein Sperrstück (32) und einen Sperrer (71, 72) mit einem Raststück (75) hat, wobei das Raststück (75) federbelastet im Sperrstück (32) anliegt.

3. Einstellbarer Aufsatzadapter gemäß Anspruch 1, **dadurch gekennzeichnet, dass** der Schlittenadapter (31) als Führungsaufsatz (32) eine Führungsschiene und der Greifelementeadapter (61) als Schiebeschlitten (62) ein T-nutensteinartiger Körper ist, der bezüglich seiner - in Verschieberichtung (69) gemessenen - Länge mehrfach in die Führungsschiene passt.

4. Einstellbarer Aufsatzadapter gemäß Anspruch 3, **dadurch gekennzeichnet, dass** der Führungsaufsatz (32) den Schiebeschlitten (62) beidseitig mittels führenden Seitenwangen (34, 35) zumindest bereichsweise umgreift.

5. Einstellbarer Aufsatzadapter gemäß Anspruch 3, **dadurch gekennzeichnet, dass** mindestens eine Seitenwange (34, 35) das Sperrstück (32) ist, das eine Reihensperrausnehmung (51) aufweist.

6. Einstellbarer Aufsatzadapter gemäß Anspruch 2, **dadurch gekennzeichnet, dass** das Raststück (75) des Sperrers (71, 72) quer zu seinem Rasthub (89) einen quadratischen Querschnitt (91) hat, wobei zwei einander gegenüberliegende gedachte Ecken des Querschnitts auf einer Geraden hintereinanderliegen, die parallel zur Verschieberichtung (69) des Schiebeschlittens (62) orientiert ist.

7. Einstellbarer Aufsatzadapter gemäß Anspruch 6, **dadurch gekennzeichnet, dass** in Belastungsrichtung die planen Abstützflanken (76) des Raststücks (75) eine Breite haben, die größer ist als 65% der Breite einer Seitenwange (34, 35) und die zusammen eine Länge haben, die größer ist als 40% der Länge einer Diagonalen des Querschnitts (91).

8. Einstellbarer Aufsatzadapter gemäß Anspruch 2, **dadurch gekennzeichnet, dass** der Sperrer (71, 72) im Raststück (75) eine Ausnehmung (78) aufweist, in der lösbar ein Betätigungselement (100) einsteck- oder einschraubbar ist.

9. Greifvorrichtung mit einem einstellbaren Aufsatzadapter nach einem der vorhergehenden Ansprüche, **dadurch gekennzeichnet, dass** in den im Grundkörper (11) der Greifvorrichtung gelagerten Schlitten (15) oder Schwenkarmen jeweils Schlittenadapter (31) befestigt sind, in denen Greifelemente (1, 2) tragende Greifelementeadapter (61) manuell verschieb- und verrastbar sind.

## Claims

1. Adjustable attachment adapter of a gripping element (1, 2) mounted on a slide (15) of a gripping device (10),
- wherein a slide adapter (31) is attached to the slide (15) and a gripping element adapter (61) is attached to the gripping element (1, 2),
- wherein the gripping element adapter (61) is seated manually displaceable in the slide adapter (31) and has a displacement direction (69) which is oriented parallel to the travelling direction (9) of the slide (15), and
- wherein at least one positively connected ratchet-and-pawl mechanism (70), which can be unlatched by a linear manual sliding movement against a spring force, the locking stroke (89) of which sliding movement is oriented transversely to the travelling direction (9) of the slide (15), is arranged between the slide adapter (31) and the gripping element adapter (61).

2. Adjustable attachment adapter according to claim 1, **characterized in that** the positively connected, manually unlockable ratchet-and-pawl mechanism (70) has a locking block (32) and a catch (71, 72) with a catch element (75), wherein the catch element (75) rests firmly in the locking block (32) under spring load.

3. Adjustable attachment adapter according to claim 1, **characterized in that** the slide adapter (31), as a guide attachment (32), is a guide rail and the gripping element adapter (61), as a displaceable slide (62), is a T-slot nut-like body, which fits into the guide rail multiple times with respect to its length, as measured in the displacement direction (69).

4. Adjustable attachment adapter according to claim 3, **characterized in that** the guide attachment (32) at least in portions surrounds the displaceable slide (62) on both sides by means of guiding sidewalls (34, 35).

5. Adjustable attachment adapter according to claim 3, **characterized in that** at least one side wall (34, 35) is the locking block (32) which has a series of locking recesses (51).

6. Adjustable attachment adapter according to claim 2, **characterized in that** the catch element (75) of the catch (71, 72) has a square cross-section (91) transverse to its locking stroke (89), wherein two opposite imagined corners of the cross section lie in a row on a straight line, which is oriented parallel to the displacement direction (69) of the displaceable slide (62).

7. Adjustable attachment adapter according to claim 6, **characterized in that** the planar support flanks (76) of the catch element (75) have a width in the load direction which is greater than 65% of the width of a side wall (34, 35) and **in that** they together have a length greater than 40% of the length of a diagonal of the cross section (91).

8. Adjustable attachment adapter according to claim 2, **characterized in that** the catch (71, 72) has a recess (78) in the catch element (75), in which an actuator (100) can be detachably inserted or screwed in.

9. Gripping device having an adjustable attachment adapter according to any one of the preceding claims, **characterized in that** slide adapters (31) are attached in the slides (15) or swivel arms supported in the main body (11) of the gripping device, within which slide adapters (31) gripping elements (1, 2) supporting gripping element adapters (61) are manually displaceable and lockable.

## Revendications

1. Embout adaptateur réglable d'un élément préhenseur (1, 2) logé sur un chariot (15) d'un dispositif de préhension (10),
- sur le chariot (15) étant fixé un adaptateur de chariot (31) et sur l'élément préhenseur (1, 2) étant fixé un adaptateur d'élément préhenseur (61),
- l'adaptateur d'élément préhenseur (61) reposant de manière manuellement coulissable dans l'adaptateur de chariot (31) et disposant d'une direction de coulissement (69) qui est orientée à la parallèle de la direction de déplacement (9) du chariot (15) et
- entre l'adaptateur de chariot (31) et l'adaptateur d'élément préhenseur (61) étant placé au moins un encliquetage directionnel par complémentarité de forme, à verrou ou à dents (70), susceptible d'être désenclenché contre une force de ressort par un déplacement en coulissement linéaire manuel, dont la course d'enclenchement (89) est orientée à la transversale de la direction de déplacement (9) du chariot (15).

2. Embout adaptateur réglable selon la revendication 1, **caractérisé en ce que** l'encliquetage directionnel par complémentarité de forme, à verrou ou à dents (70), susceptible d'être désenclenché manuellement dispose d'une pièce de blocage (32) et d'un bloqueur (71, 72) pourvu d'une pièce d'enclenchement (75), la pièce d'enclenchement (75) étant appuyée dans la pièce de blocage (32) sous la contrainte d'un ressort.

3. Embout adaptateur réglable selon la revendication 1, **caractérisé en ce qu'**en tant qu'embout de guidage (32), l'adaptateur de chariot (31) est une coulisse de guidage et en tant que chariot coulissant (62), l'adaptateur d'élément préhenseur (61) est un corps de type clavette rainurée en T, qui au niveau de sa longueur (mesurée dans la direction de coulissement (69) s'adapte plusieurs fois dans la coulisse de guidage.

4. Embout adaptateur réglable selon la revendication 3, **caractérisé en ce que** l'embout de guidage (32) entoure le chariot coulissant (62) de part et d'autre au moins par endroits, au moyen joues latérales (34, 35) de guidage.

5. Embout adaptateur réglable selon la revendication 3, **caractérisé en ce qu'**au moins une joue latérale (34, 35) est la pièce de blocage (32) qui comporte un évidement de blocage (51) en rangée.

6. Embout adaptateur réglable selon la revendication 2, **caractérisé en ce qu'**à la transversale de sa course d'enclenchement (89), la pièce d'enclenchement (75) du bloqueur (71, 72) dispose d'une section transversale (91) parallélépipédique, deux angles virtuels mutuellement opposés de la section transversale étant placés l'un derrière l'autre sur une droite qui est orientée à la parallèle de la direction de coulissement (69) du chariot coulissant (62).

7. Embout adaptateur réglable selon la revendication 6, **caractérisé en ce que** dans la direction de contrainte, les surfaces d'appui (76) planes de la pièce d'enclenchement (75) disposent d'une largeur qui est supérieure à 65 % de la largeur d'une joue latérale (34, 35) et qui conjointement, disposent d'une longueur qui est supérieure à 40 % de la longueur d'une diagonale de la section transversale (91).

8. Embout adaptateur réglable selon la revendication 2, **caractérisé en ce que** le bloqueur (71, 72) comporte dans la pièce d'enclenchement (75) un évidement (78) dans lequel un élément de manœuvre (100) est susceptible d'être inséré ou vissé.

9. Dispositif de préhension pourvu d'un embout adaptateur réglable selon l'une quelconque des revendications précédentes, **caractérisé en ce que** dans les chariots (15) ou bras pivotants logés dans le corps de base (11) du dispositif de préhension sont fixés respectivement des adaptateurs de chariot (31) dans lequel des adaptateurs d'éléments préhenseurs (61) portant des éléments préhenseurs (1, 2) sont susceptibles de coulisser et de s'enclencher.
